# FASCICULE DE BREVET EUROPEEN

(11) **EP 2 388 646 B1**
(45) Date de publication et mention de la délivrance du brevet: **20.11.2019**
(21) Numéro de dépôt: 11166224.3
(22) Date de dépôt: 16.05.2011
(51) Int. Cl.: G03B 15/00, G05D 1/08

(54) **Procédé de prise d'image**
Verfahren zur Bilderfassung
Method for capturing an image

(30) Priorité: 18.05.2010 FR 1053821
(43) Date de publication de la demande: 23.11.2011
(73) Titulaire: Airbus Defence and Space SAS, 31402 Toulouse Cedex 4 (FR)
(72) Inventeur: Vaillon, Ludovic, 31400 Toulouse (FR)
(74) Mandataire: Plasseraud IP

(56) Documents cités:
- CN-A- 101 645 742
- JP-A- 2003 104 295
- US-A- 3 658 427
- US-A- 3 698 790
- US-A- 6 023 291
- US-A1- 2009 222 153
- M. GUELMAN, A. KOGAN, A. KAZARIAN, A. LIVNE, M. ORENSTEIN, H. MICHALIK, S. ARON: "Acquisition and pointing control for inter-satellite laser communications", IEEE TRANSACTIONS ON AEROSPACE AND ELECTRONIC SYSTEMS, vol. 40, no. 4, 31 octobre 2004 (2004-10-31), pages 1239-1248, XP002623388, ISSN: 0018-9251

## Description

La présente invention concerne un procédé de prise d'image, ainsi qu'un ensemble d'imagerie qui est adapté pour mettre en œuvre un tel procédé.

De plus en plus, les missions d'observation terrestre ou de reconnaissance nécessitent d'obtenir des images avec une résolution très fine. Il peut s'agir notamment de missions d'observation qui sont réalisées à partir d'un satellite, celui-ci pouvant être un satellite à orbite basse ou un satellite géostationnaire. Par exemple, une résolution inférieure à 1 mètre peut être demandée pour des images qui sont prises à partir d'un satellite à basse altitude, et une résolution inférieure à 50 mètres pour des images prises à partir d'un satellite géostationnaire. Or, pour de telles conditions de prise d'image, la résolution qui est obtenue est limitée par les variations de la ligne de visée du système d'imagerie utilisé, qui se produisent pendant la durée d'exposition qui est mise en œuvre pour l'acquisition de chaque image. De telles variations involontaires de la ligne de visée peuvent avoir des causes multiples, telles que des vibrations produites par des parties mobiles présentes à bord du satellite, comme les systèmes de contrôle d'attitude du satellite, notamment. Dans le jargon de l'Homme du métier, ces variations involontaires de la ligne de visée pendant l'exposition de chaque prise d'image sont désignées par «bougé d'image» («image jitter» en anglais).

Diverses méthodes ont déjà été proposées, pour caractériser ou mesurer le bougé d'image. La plupart d'entre elles sont basées sur l'acquisition à haute fréquence de données qui caractérisent les variations de la ligne de visée pendant chaque exposition. Par exemple, un dispositif de métrologie par laser est ajouté au système d'imagerie pour constituer une référence pseudo-inertielle. Des images du faisceau laser de référence sont alors prises et traitées à cadence élevée, pour caractériser les vibrations du système d'imagerie pendant chaque exposition de prise d'image d'observation. Mais l'ajout au système d'imagerie d'un tel dispositif qui constitue une référence pseudo-inertielle rend plus complexes la conception et la réalisation de ce système. Son prix de revient est alors augmenté, ainsi que son poids, ce qui est particulièrement pénalisant lorsque le système d'imagerie est destiné à être embarqué à bord d'un satellite, notamment par rapport au coût du lancement du satellite.

Il a aussi été proposé, notamment dans US 2009/0222153, d'acquérir et de traiter à haute cadence, pendant l'exposition qui est réalisée pour chaque image d'observation, des images d'étoiles qui constituent des repères fixes, du fait de leur éloignement. Mais de façon générale, la faible luminosité des étoiles est incompatible avec l'acquisition d'images de ces étoiles selon une cadence qui est élevée, et avec un rapport signal sur bruit qui soit suffisant pour permettre une mesure précise de leur direction.

Par ailleurs, US 3,658,427 divulgue un contrôleur d'attitude pour satellite, dont le principe est basé sur l'acquisition d'une figure d'interférence formée à partir du rayonnement qui est issu d'une source éloignée, et qui peut être un faisceau laser.

Enfin, JP 2003104295 concerne un stabilisateur de vol pour hélicoptère.

Un but de la présente invention consiste alors à fournir une méthode de caractérisation du bougé d'image qui intervient lors de la prise d'une image d'observation, pour laquelle les inconvénients précédents sont réduits ou supprimés.

Pour atteindre ce but et d'autres, l'invention propose un procédé de prise d'image qui utilise un système d'imagerie embarqué à bord d'un porteur («carrier» en anglais). Dans le cadre de la présente invention, on comprend par porteur tout engin ou structure fixe ou mobile sur laquelle il est possible d'installer un système d'imagerie. En particulier, un tel porteur peut être un véhicule terrestre, un aéronef, un satellite ou un navire. Le système d'imagerie est pointé vers une zone cible dont une image doit être acquise, selon une ligne de visée du système d'imagerie qui est soumise à des variations par rapport à la zone cible à cause de vibrations du système d'imagerie.

Un dispositif de détection optique est connecté rigidement au système d'imagerie pendant les variations de la ligne de visée du système d'imagerie. Ce dispositif de détection optique est adapté pour former, à l'intérieur d'un plan focal, une image d'une source de rayonnement qui est éloignée par rapport au porteur et vers laquelle il est lui-même pointé. Il permet de détecter un déplacement, dans le plan focal, de l'image de la source de rayonnement éloignée pour fournir une caractérisation des variations de la ligne de visée du système d'imagerie.

Le dispositif de détection optique est pointé, pendant une séquence de prise d'image par le système d'imagerie, vers un terminal de communication optique par signaux laser («free space laser optical communication terminal» en anglais) qui est externe au porteur, et qui constitue la source de rayonnement éloignée. Autrement dit, la source laser du terminal de communication externe au porteur est prise comme référence pour caractériser les variations de la ligne de visée du système d'imagerie.

Ainsi, selon l'invention, les variations de la ligne de visée du système d'imagerie d'observation sont détectées à partir de déplacements apparents de l'image d'une source lumineuse externe au système d'imagerie, dans le plan focal d'un détecteur optique. Cette source lumineuse est constituée par le laser d'émission d'un terminal de communication optique éloigné. Grâce à son éloignement, ce terminal de communication optique externe apparaît comme étant fixe, à l'échelle des vibrations du système d'imagerie. En outre, comme il s'agit d'une source de rayonnement laser, son intensité est compatible avec l'exécution rapide de séquences de prise et de traitement d'images de cette source laser, par le dispositif de détection optique, pour caractériser les variations de la ligne de visée du système d'imagerie d'observation.

Par ailleurs, étant donné que le terminal de communication optique dont la source laser est prise comme référence, est externe au système d'imagerie, la complexité, le prix de revient et la masse de ce dernier ne sont pas sensiblement augmentés.

Selon l'invention, le système d'imagerie comprend un miroir mobile de compensation, commandé en temps réel pendant la séquence de prise d'image en fonction de la caractérisation des variations de la ligne de visée du système d'imagerie qui est fournie par le dispositif de détection optique, pour réduire une amplitude de déplacements de la zone cible dans l'image acquise par le système d'imagerie.

Selon encore une autre caractéristique de l'invention, le dispositif de détection optique fait lui-même partie d'un terminal de communication optique par signaux laser qui est embarqué à bord du porteur, et qui en outre utilisé pour transmettre des données de l'image acquise par le système d'imagerie au terminal de communication optique par signaux laser qui est externe au porteur.

Dans différents modes de mise en œuvre de l'invention, le système d'imagerie et le dispositif de détection optique, ou le terminal de communication optique dont il fait partie, peuvent être contenus dans un boîtier commun ou portés par un support commun à bord du porteur. Eventuellement, le dispositif de détection optique peut être intégré au système d'imagerie, ou bien partager certains composants avec ce dernier. Notamment, le système d'imagerie et le dispositif de détection optique peuvent comprendre une optique de collecte de rayonnement qui est commune. Autrement dit, la même optique collecte simultanément du rayonnement qui est utilisé par le système d'imagerie pour former des images d'observation, et du rayonnement laser qui provient du terminal de communication optique externe et qui est utilisé par le dispositif de détection optique.

Dans différentes applications d'un procédé selon l'invention, le terminal de communication optique par signaux laser qui est externe au satellite, et qui constitue la source de rayonnement éloignée, peut être situé :
- à la surface de la Terre, ou à bord d'un autre porteur, y compris un autre satellite ou aéronef; et/ou
- dans ou en dehors d'un champ optique d'entrée du système d'imagerie, qui contient la zone cible.

L'invention propose aussi un ensemble d'imagerie qui peut être utilisé comme décrit précédemment. Un tel ensemble d'imagerie comprend le système d'imagerie qui est dédié à la prise d'images d'observation, et le dispositif de détection qui est connecté rigidement à ce système d'imagerie. Ce dispositif de détection optique est adapté pour former l'image d'une source laser qui constitue la source de rayonnement externe. L'ensemble d'imagerie comprend en outre :
- le miroir mobile de compensation et une unité de contrôle adaptée pour commander en temps réel ce miroir mobile de compensation en fonction de la caractérisation des variations de la ligne de visée du système d'imagerie qui est fournie par le dispositif de détection optique, de façon à réduire une amplitude de déplacements de la zone cible dans l'image acquise par le système d'imagerie ; et
- un terminal de communication optique par signaux laser, le dispositif de détection optique étant une partie de ce terminal de communication optique par signaux laser.

De plus, le terminal de communication optique par signaux laser est adapté pour transmettre des données de l'image acquise par le système d'imagerie à un autre terminal de communication optique par signaux laser qui constitue la source de rayonnement externe.

D'autres particularités et avantages de la présente invention apparaîtront dans la description ci-après d'exemples de mise en œuvre non limitatifs, en référence aux dessins annexés, dans lesquels :
- les figures 1a et 1b illustrent deux applications d'un procédé selon l'invention ;
- la figure 2 est un schéma optique d'un ensemble d'imagerie selon l'invention ; et
- les figures 3a et 3b illustrent deux variantes de mise en œuvre de l'invention.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

Un ensemble d'imagerie selon l'invention comprend les deux éléments principaux suivants, qui sont destinés à être embarqués ensemble à bord d'un porteur :
- un système d'imagerie qui est référencé 1, et qui est dédié à l'acquisition d'images, dites images d'observation. Pendant la durée d'exposition du système 1 qui est réalisée pour prendre une image d'observation, la ligne de visée du système 1 peut varier involontairement, introduisant un «bougé d'image» ; et
- un dispositif de détection optique qui est référencé 2, et qui est destiné à caractériser les variations de la ligne de visée du système 1, en utilisant une source laser de référence, externe au porteur de l'ensemble d'imagerie.

Bien que le dispositif 2 fonctionne aussi par formation d'image, il est distinct, par certains au moins de ces composants et par sa fonction, du système 1. Les références V et V₀ désignent respectivement la ligne de visée du système d'imagerie 1 et la direction dans laquelle une source laser externe est détectée par le dispositif de détection optique 2. Le système d'imagerie 1 est susceptible de subir des vibrations, ou des microvibrations, qui sont transmises par le porteur. De telles vibrations peuvent être causées par le mouvement de parties mobiles d'un satellite porteur S, telles que des systèmes de contrôle d'attitude de celui-ci. Ces vibrations provoquent alors des variations de la ligne de visée V. Selon l'invention, la direction V₀ sert de référence pour caractériser les variations de la ligne de visée V.

D'une façon générale, il est nécessaire que le dispositif de détection optique 2 soit connecté rigidement au système d'imagerie 1. On entend par connexion rigide une liaison mécanique telle que le dispositif de détection optique 2 et le système d'imagerie 1 soient fixes l'un par rapport à l'autre, de sorte que des vibrations du système d'imagerie 1 soient transmises au dispositif de détection optique 2, pour être détectées par ce dernier. Toutefois, cette connexion rigide peut n'être fixe que pendant une durée d'exposition du système d'imagerie 1, ou pendant une séquence de prise d'images successives par le système 1, puis être ajustée entre deux expositions successives ou entre deux séquences de prise d'images. Tel est le cas, notamment, lorsque la zone imagée, dite zone cible, est variée : la ligne de visée V du système d'imagerie 1 est alors modifiée volontairement, et l'orientation du dispositif de détection optique 2 par rapport au système 1 peut être modifiée simultanément pour que le dispositif 2 reste dirigé vers une même source laser externe 100.

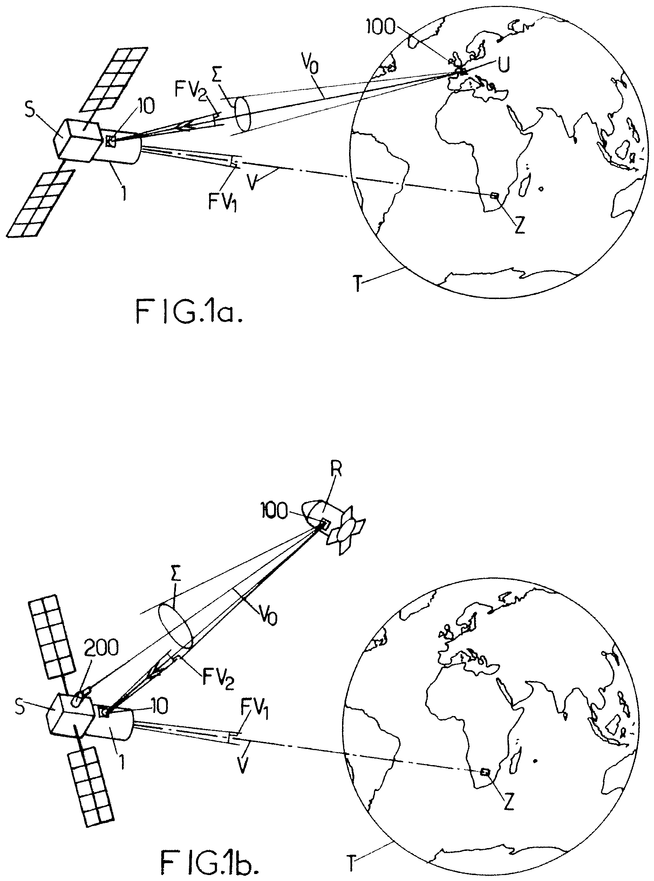

Conformément à la figure 1a, le système d'imagerie 1 est embarqué à bord du satellite terrestre S, qui peut être géostationnaire ou à basse altitude. Le système d'imagerie 1 est utilisé pour l'observation d'une portion de la surface de la Terre, notée T. Cette portion de surface terrestre constitue la zone cible d'observation, et est notée Z.

La source laser 100 est dirigée vers le satellite S, à partir d'une station terrestre notée U. La station terrestre U peut être située à grande distance de la zone cible Z, notamment à plusieurs milliers de kilomètres. La distance angulaire entre la zone cible Z et la station U, à partir du satellite S, peut être de plusieurs degrés. Dans ce cas, et étant donné que le champ optique d'entrée du système d'imagerie 1 possède une ouverture angulaire qui est usuellement inférieure à 1 degré, la source 100 est située en dehors de ce champ optique d'entrée du système d'imagerie 1. Dans un mode préféré de réalisation où le rayonnement de la source laser 100 est détecté à travers l'optique de collecte du système d'imagerie 1, un miroir de déflexion 10 peut être disposé dans une partie du champ d'entrée de cette optique de collecte, pour orienter une partie du rayonnement laser de la source 100 vers le dispositif de détection optique 2.

Eventuellement, plusieurs sources laser externes peuvent être installées à des endroits différents de la surface de la Terre T. L'une de ces sources est alors sélectionnée en orientant le miroir de déflexion 10 pour servir de référence pendant une séquence de prise d'images. Elle peut être sélectionnée en fonction d'une combinaison de plusieurs critères, notamment la visibilité de chaque source laser externe à partir du satellite S, l'absence de nuages entre la source sélectionnée et le satellite S, etc.

La source externe 100 est constituée par un terminal de communication optique par signaux laser. Un autre terminal de communication optique par signaux laser peut alors être avantageusement embarqué à bord du satellite S, et une liaison optique est établie entre les deux terminaux pour assurer que le terminal terrestre U soit pointé en direction du satellite S. Du fait de la divergence du faisceau laser qui est produit par la source 100, la section Σ de ce faisceau au niveau du satellite S a un diamètre de plusieurs dizaines de mètres, si bien que la source 100 peut être imagée à travers l'optique de collecte du système d'imagerie 1 même si le terminal de communication optique qui est situé sur le satellite S est séparé du système 1.

L'ensemble d'imagerie 1 peut être embarqué alternativement à bord d'un aéronef quelconque, par exemple un avion sans pilote, à la place du satellite S. L'invention est alors mise en œuvre de façon similaire à partir de l'aéronef, pour observer la zone cible Z. La source laser 100 peut encore être située en dehors de la zone cible d'observation Z, mais elle peut aussi être située à l'intérieur de celle-ci. Dans ce dernier cas, le miroir de déflexion 10 n'est pas indispensable pour détecter le rayonnement laser de la source 100 à travers l'optique de collecte du système d'imagerie 1.

Il est entendu que le satellite S peut encore être remplacé par tout autre porteur, y compris un véhicule de déplacement terrestre ou un navire.

La figure 1b illustre une application alternative de l'invention, encore à partir d'un satellite S. Cette fois, la source 100 est un terminal de communication optique par signaux laser qui est embarqué à bord d'un autre satellite, par exemple un autre satellite d'observation en orbite basse, c'est-à-dire ayant une altitude qui est inférieure à celle de l'orbite géostationnaire, ou un satellite géostationnaire de relais de communication R. La référence 200 désigne un terminal de communication optique par signaux laser qui est embarqué à bord du satellite S, et qui est adapté pour être en liaison optique avec le terminal 100 du satellite R.

Pour toutes les applications de l'invention qui viennent d'être évoquées, le système d'imagerie 1 et le dispositif de détection optique 2 sont rigidement connectés l'un à l'autre, au moins pendant chaque exposition du système d'imagerie 1. Une telle combinaison peut être réalisée mécaniquement de multiples façons. En particulier, un boîtier ou un support commun peut être utilisé à bord du satellite S, pour le système d'imagerie 1 et le dispositif de détection optique 2.

Selon une des caractéristiques de l'invention, le dispositif de détection optique 2 fait partie du terminal de communication optique par signaux laser 200 à bord du satellite S, ce terminal 200 étant lui-même combiné avec le système d'imagerie 1.

De façon générale lorsque la source laser externe 100 est un terminal de communication optique par signaux laser, la liaison optique qui est établie avec le satellite S peut être utilisée pour transmettre des données des images qui sont acquises par le système d'imagerie 1, au terminal 100. Ainsi, le terminal de communication optique par signaux laser qui est externe au porteur possède les deux fonctions, de référence pour caractériser les variations de la ligne de visée V du système d'imagerie 1 d'une part, et de récepteur des données d'image des images qui sont prises par le système d'imagerie 1 d'autre part.

En parallèle, si le dispositif de détection optique 2 fait lui-même partie d'un terminal de communication optique qui est combiné avec le système d'imagerie 1 à bord du satellite S, ce terminal de communication optique possède les deux fonctions de détection des variations de la ligne de visée V du système d'imagerie 1 d'une part, et d'émetteur/récepteur de données d'autre part. En particulier, il peut transmettre des données des images qui sont prises par le système d'imagerie 1.

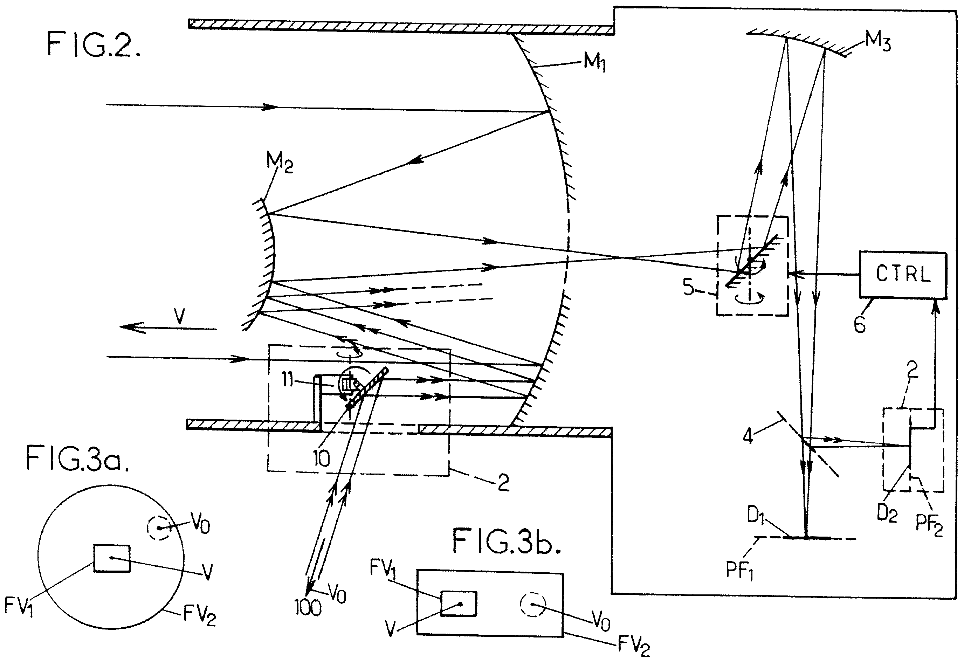

En référence à la figure 2, on décrit maintenant un mode particulier de réalisation de l'ensemble d'imagerie, dans lequel le système d'imagerie 1 et le dispositif de détection optique 2 comprennent une optique de collecte de rayonnement qui est commune au système 1 et au dispositif 2. L'optique de collecte de rayonnement peut être un télescope d'un type connu, par exemple constitué d'un miroir primaire M₁, d'un miroir secondaire M₂ et d'un miroir tertiaire M₃. Elle est associée à un capteur d'image D₁, qui est placé dans un premier plan focal PF₁ du télescope, pour constituer le système d'imagerie 1. Ce dernier peut notamment être adapté pour former et prendre des images à partir d'un rayonnement infrarouge ou visible qui provient de la zone cible Z selon la ligne de visée V.

Outre l'optique de collecte de rayonnement commune, le dispositif de détection optique 2 comprend un autre capteur d'image D₂, qui est placé dans un second plan focal PF₂ du télescope, le plan focal PF₂ pouvant être distinct du plan focal PF₁. Un séparateur de longueur d'onde 4 peut alors être utilisé pour diriger le rayonnement qui provient de la source éloignée 100 et qui est transmis par l'optique de collecte vers le capteur d'image D₂, et pour diriger simultanément les rayons qui forment l'image de la zone cible Z vers le capteur d'image D₁. Par exemple, le séparateur 4 peut être une lame dichroïque adaptée pour réfléchir sélectivement du rayonnement à la longueur d'onde de la source laser 100 vers le capteur D₂, et pour transmettre le rayonnement en dehors de cette longueur d'onde vers le capteur D₁. Ainsi, le rayonnement qui est détecté par un système d'imagerie fonctionnant dans le domaine visible ou proche infra-rouge, c'est-à-dire avec des longueurs d'onde qui sont inférieures à 1 µm (micromètre), peut être facilement séparé d'un signal laser à la longueur d'onde 1,55 µm, qui est souvent choisie pour les communications optiques.

Les capteurs d'image D₁ et D₂ peuvent être du type CCD ou CMOS.

Le dispositif de détection optique 2 peut comprendre aussi un miroir de déflexion 10 qui est connecté mécaniquement au système d'imagerie 1 d'une façon fixe et rigide pendant chaque séquence de prise d'image, et qui est disposé pour diriger du rayonnement provenant de la source de rayonnement éloignée 100 vers l'optique de collecte. Toutefois, pour que le dispositif de détection optique 2 puisse rester pointé vers la source 100 lorsque l'optique de collecte est dirigée successivement vers des zones cibles différentes, pour prendre des images successives de ces zones cibles, le miroir de déflexion 10 peut être connecté mécaniquement au système d'imagerie 1 par l'intermédiaire d'un support à orientation variable 11. Ce support 11 peut comprendre une tête mobile à deux axes de rotation, sur laquelle est fixé le miroir 10. L'orientation du miroir de déflexion 10 par rapport au système d'imagerie 1 peut alors être variée entre deux séquences successives de prise d'images par le système d'imagerie 1, de sorte que le dispositif de détection optique 2 forme une image de la source de rayonnement éloignée 100 pendant chacune des deux séquences successives de prise d'images. Le support 11 est sélectionné par l'Homme du métier avec un mécanisme qui est adapté pour produire suffisamment rapidement et précisément les changements d'orientation du miroir de déflexion 10.

Lors d'une mise en œuvre de l'invention, la ligne de visée V du système d'imagerie 1 est dirigée vers la zone cible Z, pour amener cette dernière dans le champ optique d'entrée («optical field of view» en anglais) FV₁ du système 1. En parallèle, des données de localisation de la source laser 100 sont communiquées au dispositif de détection optique 2, afin d'orienter le miroir de déflexion 10 pour amener une image de la source 100 sur le capteur D₂. Autrement dit, le miroir de déflexion 10 est orienté de sorte que la source laser 100 soit à l'intérieur du champ optique d'entrée FV₂ du dispositif de détection optique 2. D'une façon commode dans l'application de l'invention qui est illustrée par la figure 1b, les données de localisation de la source laser 100 sont déterminées par le terminal de communication optique par signaux laser 200, via une séquence d'acquisition, puis sont transmises à une unité de commande du support 11. Cette fonction d'acquisition peut aussi être réalisée par le dispositif 2.

Comme illustré par les figures 3a et 3b, le champ optique d'entrée FV₂ du dispositif de détection optique 2 peut être plus grand que le champ optique d'entrée FV₁ du système d'imagerie 1, même à travers une optique d'entrée qui est commune au dispositif 2 et au système 1. Dans ce cas, l'orientation du miroir de déflexion 10 pour imager la source laser 100 sur le capteur D₂ peut être exécutée avec une exigence de précision qui est réduite. La figure 3a représente une telle configuration, dans laquelle le champ optique d'entrée FV₂ s'étend au-delà du champ optique d'entrée FV₁, avec une marge qui est sensiblement constante tout autour de ce dernier. Alternativement, l'extension du champ optique d'entrée FV₂ au-delà du champ optique d'entrée FV₁ peut être prévue que sur un seul côté de ce dernier, comme représenté sur la figure 3b. Des dimensions des composants optiques qui sont utilisés dans l'ensemble d'imagerie peuvent alors être réduites. Dans ce cas, le miroir de déflexion 10 peut en outre être tourné autour de la ligne de visée V pour amener la source laser externe 100 du côté de la ligne de visée V qui correspond à l'extension du champ optique d'entrée FV₂, si la source laser 100 est en dehors du champ optique d'entrée FV₁.

Dans les figures 3a et 3b, l'image de la ligne de visée V est au centre du champ optique d'entrée FV₁, et la direction V₀ de la source laser externe 100 est représentée au centre d'un cercle en traits interrompus, qui correspond à la limite des déplacements de la direction V₀ dans le plan focal PF₂, provoqués par les vibrations de l'ensemble d'imagerie.

De préférence, le dispositif de détection optique 2 est adapté pour réaliser des caractérisations des variations de la ligne de visée V du système d'imagerie 1 selon une fréquence de mesure qui supérieure à 1 kHz (kilohertz), avantageusement supérieure à 5 kHz, voire supérieure à 15 kHz. Une telle fréquence de mesure est possible car la source externe 100 est une source laser. Une telle fréquence de mesure pour le dispositif de détection optique 2 est alors compatible avec une durée d'exposition qui est supérieure à 0,01 s (seconde) pour les images d'observation qui sont acquises par le système d'imagerie 1. En outre, chaque caractérisation ou mesure des variations de la ligne de visée V du système d'imagerie 1 est réalisée par le dispositif de détection optique 2 avec une précision angulaire qui est de préférence inférieure à 0,05 µrad (microradian). De telles caractéristiques du dispositif 2 permettent de mesurer des variations de la ligne de visée V qui sont provoquées par des microvibrations du système d'imagerie 1. En général, de telles microvibrations sont transmises au système d'imagerie 1 par le satellite S.

Selon un perfectionnement d'un ensemble d'imagerie conforme à l'invention, le système d'imagerie 1 peut comprendre en outre un miroir mobile de compensation 5, qui est commandé en temps réel pendant une exposition en cours du capteur D₁ ou une séquence de prise d'images d'observation en cours, en fonction de la caractérisation des variations de la ligne de visée V du système d'imagerie 1 qui est fournie par le dispositif de détection optique 2. Ainsi, une amplitude des déplacements de la zone cible Z dans l'image qui est acquise par le système d'imagerie 1, couramment désignée par bougé d'image, peut être réduite. Pour cela, le système d'imagerie 1 peut comprendre aussi une unité de contrôle 6, notée CTRL sur la figure 2, qui est adaptée pour commander l'orientation du miroir mobile de compensation 5. L'unité de contrôle 6 reçoit sur une entrée de commande un signal qui est produit par le dispositif de détection optique 2, et qui indique la déviation instantanée de la direction V₀. L'orientation du miroir mobile de compensation 5 peut être modifiée à la fréquence des mesures des variations de la ligne de visée V par le dispositif de détection optique 2.

Bien qu'un mode de mise en œuvre de l'invention puisse être préféré, dans lequel le terminal de communication optique par signaux laser 200 soit séparé de l'ensemble d'imagerie, il est possible de combiner le dispositif de détection optique 2 avec le terminal 200. Dans ce cas, le miroir mobile de compensation 5 peut appartenir à un mécanisme de pointage fin du terminal 200. Autrement dit, le miroir mobile de compensation 5 et l'unité de contrôle 6 peuvent être communs au dispositif de détection optique 2 et au terminal de communication optique par signaux laser 200.

Il est entendu que l'invention, tout en étant défini pour le jeu de revendications, peut encore être mise en œuvre en introduisant d'autres adaptations ou combinaisons par rapport à celles qui ont été évoquées, tout en conservant certains au moins des avantages qui ont été cités. De telles adaptations ou combinaisons peuvent être motivées par des applications particulières de l'invention, d'une façon qui est accessible à l'Homme du métier sans nécessiter d'activité inventive supplémentaire.

## Revendications

1. Procédé de prise d'image utilisant un système d'imagerie embarqué à bord d'un porteur, y compris un véhicule terrestre, un aéronef, un satellite (S) ou un navire, suivant lequel le système d'imagerie (1) est pointé vers une zone cible (Z) dont une image doit être acquise, selon une ligne de visée (V) du système d'imagerie qui est soumise à des variations par rapport à la zone cible à cause de vibrations dudit système d'imagerie,
suivant lequel un dispositif de détection optique (2) est connecté rigidement au système d'imagerie pendant les variations de la ligne de visée du système d'imagerie, ledit dispositif de détection optique étant adapté pour former, à l'intérieur d'un plan focal (PF₂), une image (V₀) d'une source de rayonnement (100) éloignée par rapport au porteur et vers laquelle ledit dispositif de détection optique est lui-même pointé, et pour détecter un déplacement, dans ledit plan focal, de ladite image de la source de rayonnement éloignée pour fournir une caractérisation des variations de la ligne de visée du système d'imagerie,
le dispositif de détection optique (2) faisant lui-même partie d'un terminal de communication optique par signaux laser qui est embarqué à bord du porteur (S), et étant pointé, pendant la séquence de prise d'image par le système d'imagerie (1), vers un terminal de communication optique par signaux laser externe au porteur, et utilisé pour constituer la source de rayonnement éloignée,
le procédé étant **caractérisé en ce que** le système d'imagerie (1) comprend un miroir mobile de compensation (5), commandé en temps réel pendant une séquence de prise d'image en fonction de la caractérisation des variations de la ligne de visée (V) du système d'imagerie qui est fournie par le dispositif de détection optique (2), pour réduire une amplitude de déplacements de la zone cible (Z) dans l'image acquise par le système d'imagerie,
et **en ce que** le dispositif de détection optique (2) est en outre utilisé pour transmettre des données de l'image acquise par le système d'imagerie (1) au terminal de communication optique par signaux laser qui est externe au porteur.

2. Procédé selon la revendication 1, suivant lequel le système d'imagerie (1) et le dispositif de détection optique (2) sont contenus dans un boîtier commun ou portés par un support commun à bord du porteur.

3. Procédé selon la revendication 1 ou 2, suivant lequel le système d'imagerie (1) et le dispositif de détection optique (2) comprennent une optique de collecte de rayonnement (M₁, M₂, M₃) commune audit système d'imagerie et audit dispositif de détection optique.

4. Procédé selon la revendication 3, suivant lequel le dispositif de détection optique (2) comprend en outre un miroir de déflexion (10) qui est connecté mécaniquement au système d'imagerie (1) d'une façon fixe et rigide pendant la séquence de prise d'image, et qui est disposé pour diriger du rayonnement provenant de la source de rayonnement éloignée (100) vers l'optique de collecte (M₁, M₂, M₃).

5. Procédé selon la revendication 4, suivant lequel le miroir de déflexion (10) du dispositif de détection optique (2) est connecté mécaniquement au système d'imagerie (1) par l'intermédiaire d'un support à orientation variable (11), et suivant lequel une orientation dudit miroir de déflexion par rapport au système d'imagerie est variée entre deux séquences successives de prise d'images par le système d'imagerie, de sorte que le dispositif de détection optique forme une image de la source de rayonnement éloignée (100) pendant chacune des deux séquences successives de prise d'images.

6. Procédé selon l'une quelconque des revendications 3 à 5, suivant lequel un séparateur de longueurs d'onde (4) est utilisé pour diriger le rayonnement provenant de la source de rayonnement éloignée (100) et transmis par l'optique de collecte (M₁, M₂, M₃) vers un capteur d'image (D₂) du dispositif de détection optique (2), et pour diriger simultanément des rayons formant l'image de la zone cible (Z) vers un capteur d'image (D₁) du système d'imagerie (1).

7. Procédé selon la revendication 3, suivant lequel le miroir mobile de compensation (5) appartient en outre à un mécanisme de pointage fin du terminal de communication optique par signaux laser embarqué à bord du porteur.

8. Procédé selon l'une quelconque des revendications précédentes, suivant lequel le dispositif de détection optique (2) réalise les caractérisations des variations de la ligne de visée (V) du système d'imagerie (1) selon une fréquence de mesure supérieure à 1 kHz.

9. Procédé selon l'une quelconque des revendications précédentes, suivant lequel chaque caractérisation de variation de la ligne de visée (V) du système d'imagerie (1) est réalisée avec une précision angulaire inférieure à 0,05 µrad.

10. Procédé selon l'une quelconque des revendications précédentes, suivant lequel le système d'imagerie (1) est embarqué à bord d'un satellite terrestre géostationnaire ou d'un satellite terrestre à basse altitude (S), et suivant lequel la zone cible (Z) est une portion de la surface de la Terre (T).

11. Procédé selon la revendication 10, suivant lequel le terminal de communication optique par signaux laser qui est externe au satellite (S), et qui constitue la source de rayonnement éloignée (100), est situé à la surface de la Terre (T).

12. Procédé selon la revendication 11, suivant lequel le terminal de communication optique par signaux laser qui est externe au satellite (S), et qui constitue la source de rayonnement éloignée (100), est situé en dehors d'un champ optique d'entrée (FV₁) du système d'imagerie (1) contenant la zone cible (Z).

13. Procédé selon la revendication 10, suivant lequel le terminal de communication optique par signaux laser qui est externe au satellite (S), et qui constitue la source de rayonnement éloignée (100), est situé à bord d'un autre porteur, y compris un autre satellite (R) ou aéronef.

14. Ensemble d'imagerie adapté pour être embarqué à bord d'un porteur, y compris un véhicule terrestre, un aéronef, un satellite (S) ou un navire, ledit ensemble d'imagerie comprenant :
- un système d'imagerie (1) destiné à être pointé vers une zone cible (Z) dont une image doit être acquise, selon une ligne de visée (V) du système d'imagerie ;
- un dispositif de détection optique (2), qui est connecté rigidement au système d'imagerie pendant une séquence de prise d'image par le système d'imagerie, ledit dispositif de détection optique étant adapté pour former, à l'intérieur d'un plan focal (PF₂), une image (V₀) d'une source de rayonnement externe (100), et pour détecter un déplacement, dans ledit plan focal, de ladite image de la source de rayonnement externe pour fournir une caractérisation de variations de la ligne de visée du système d'imagerie; et
- un terminal de communication optique par signaux laser, le dispositif de détection optique (2) étant une partie dudit terminal de communication optique par signaux laser, et le dispositif de détection optique (2) étant adapté pour former l'image d'une source laser constituant la source de rayonnement externe (100),
l'ensemble d'imagerie étant **caractérisé en ce qu'**il comprend en outre :
- un miroir mobile de compensation (5) et une unité de contrôle (6) adaptée pour commander en temps réel le miroir mobile de compensation en fonction de la caractérisation des variations de la ligne de visée (V) du système d'imagerie (1) qui est fournie par le dispositif de détection optique (2), de façon à réduire une amplitude de déplacements de la zone cible (Z) dans l'image acquise par le système d'imagerie ; et
et **en ce que** le terminal de communication optique par signaux laser est adapté pour transmettre des données de l'image acquise par le système d'imagerie (1) à un autre terminal de communication optique par signaux laser qui constitue la source de rayonnement externe (100).

15. Ensemble d'imagerie selon la revendication 14, suivant lequel le système d'imagerie (1) et le dispositif de détection optique (2) sont contenus dans un même boîtier ou portés par un support commun à bord du porteur.

16. Ensemble d'imagerie selon la revendication 14 ou 15, comprenant une optique de collecte de rayonnement (M₁, M₂, M₃) commune au système d'imagerie (1) et au dispositif de détection optique (2).

17. Ensemble d'imagerie selon la revendication 16, dans lequel le dispositif de détection optique (2) comprend en outre un miroir de déflexion (10) connecté mécaniquement au système d'imagerie (1) d'une façon fixe et rigide pendant la séquence de prise d'image, et disposé pour diriger du rayonnement provenant de la source de rayonnement externe (100) vers l'optique de collecte (M₁, M₂, M₃).

18. Ensemble d'imagerie selon la revendication 17, dans lequel le miroir de déflexion (10) du dispositif de détection optique (2) est connecté mécaniquement au système d'imagerie (1) par l'intermédiaire d'un support à orientation variable (11), et adapté pour qu'une orientation dudit miroir de déflexion par rapport au système d'imagerie puisse être variée entre deux séquences successives de prise d'images par le système d'imagerie.

19. Ensemble d'imagerie selon l'une quelconque des revendications 16 à 18, comprenant un séparateur de longueur d'onde (4) disposé pour diriger le rayonnement provenant de la source de rayonnement externe (100) et transmis par l'optique de collecte (M₁, M₂, M₃) vers un capteur d'image (D₂) du dispositif de détection optique (2), et pour diriger simultanément des rayons formant l'image de la zone cible (Z) vers un capteur d'image (D₁) du système d'imagerie (1).

20. Ensemble d'imagerie selon la revendication 16, dans lequel le terminal de communication optique par signaux laser comprend un mécanisme de pointage fin, et le miroir mobile de compensation (5) fait en outre partie dudit mécanisme de pointage fin.

21. Ensemble d'imagerie selon l'une quelconque des revendications 14 à 20, dans lequel le dispositif de détection optique (2) est adapté pour réaliser les caractérisations des variations de la ligne de visée (V) du système d'imagerie (1) selon une fréquence de mesure supérieure à 1 kHz.

22. Ensemble d'imagerie selon l'une quelconque des revendications 14 à 21, dans lequel le dispositif de détection optique (2) est adapté pour réaliser chaque caractérisation des variations de la ligne de visée (V) du système d'imagerie (1) avec une précision angulaire inférieure à 0,05 µrad.

## Patentansprüche

1. Verfahren zur Bilderfassung unter Verwenden eines an Bord eines Trägers eingebauten Bildgebungssystems, wobei der Träger ein Landfahrzeug, ein Luftfahrzeug, einen Satelliten (S) oder ein Schiff fasst, wobei das Bildgebungssystem (1) zu einem Zielbereich (Z) ausgerichtet ist, von dem ein Bild gemäß einer Ziellinie (V) des Bildgebungssystems aufgenommen werden muss, die Schwankungen im Verhältnis zum Zielbereich aufgrund von Vibrationen des Bildgebungssystems unterliegt,
wobei während der Schwankungen der Sichtlinie des Bildgebungssystems eine optische Erkennungsvorrichtung (2) fest an das Bildgebungssystem angeschlossen ist, wobei die optische Erkennungsvorrichtung geeignet ist, um im Innern einer Fokalfläche (PF₂) ein Bild (V₀) einer Strahlungsquelle (100) zu bilden, die im Verhältnis zum Träger entfernt ist und zu der die optische Erkennungsvorrichtung selbst ausgerichtet ist, und um eine Verschiebung des Bildes der entfernten Strahlungsquelle in der Fokalfläche zu erkennen, um eine Charakterisierung der Schwankungen der Sichtlinie des Bildgebungssystems zu liefern,
wobei die optische Erkennungsvorrichtung (2) selbst Teil eines optischen Kommunikationsterminals per Lasersignalen ist, das an Bord des Trägers (S) eingebaut ist und während der Bilderfassungs-Sequenz durch das Bildgebungssystem (1) zu einem optischen Kommunikationsterminal per zu dem Träger externen Lasersignalen ausgerichtet und zum Bilden der entfernten Strahlungsquelle verwendet wird,
wobei das Verfahren **dadurch gekennzeichnet ist, dass** das Bildgebungssystem (1) einen mobilen Ausgleichsspiegel (5) umfasst, der in Echtzeit während einer Bilderfassungs-Sequenz in Abhängigkeit von der Charakterisierung der Schwankungen der Sichtlinie (V) des Bildgebungssystems gesteuert wird, das durch die optische Erfassungsvorrichtung (2) geliefert wird, um eine Verschiebungsamplitude des Zielbereichs (Z) in dem vom Bildgebungssystem aufgenommenen Bild zu mindern,
und dass die optische Erkennungsvorrichtung (2) darüber hinaus zum Übertragen der Daten des von dem Bildgebungssystem (1) aufgenommenen Bilds auf das optische Kommunikationsterminal per Lasersignal verwendet wird, das zu dem Träger extern ist.

2. Verfahren nach Anspruch 1, wobei das Bildgebungssystem (1) und die optische Erkennungsvorrichtung (2) in einem gemeinsamen Kasten enthalten oder durch eine gemeinsame Stütze an Bord des Trägers getragen sind.

3. Verfahren nach Anspruch 1 oder 2, wobei das Bildgebungssystem (1) und die optische Erkennungsvorrichtung (2) eine gemeinsame Strahlungsauffang-Optik (M₁, M₂, M₃) an dem Bildgebungssystem und an der optischen Erkennungsvorrichtung umfassen.

4. Verfahren nach Anspruch 3, wobei die optische Erkennungsvorrichtung (2) darüber hinaus einen Ablenkspiegel (10) umfasst, der während der Bilderfassungs-Sequenz mechanisch an das Bildgebungssystem (1) fest und steif angeschlossen ist und der zum Lenken der Strahlung, die aus der entfernten Strahlungsquelle (100) stammt, zur Auffang-Optik (M₁, M₂, M₃) angeordnet ist.

5. Verfahren nach Anspruch 4, wobei der Ablenkspiegel (10) der optischen Erkennungsvorrichtung (2) mechanisch an das Bildgebungssystem (1) mittels eines Trägers mit variabler Ausrichtung (11) angeschlossen ist und wobei eine Ausrichtung des Ablenkspiegels in Bezug auf das Bildgebungssystem zwischen zwei sukzessiven Bilderfassungs-Sequenzen durch das Bildgebungssystem derart variiert wird, dass die optische Erkennungsvorrichtung während jeder der zwei sukzessiven Bilderfassungs-Sequenzen ein Bild der entfernten Strahlungsquelle (100) bildet.

6. Verfahren nach einem der Ansprüche 3 bis 5, wobei ein Wellenlängen-Trenner (4) zum Lenken der Strahlung, die aus der entfernten Strahlungsquelle (100) stammt und von der Auffangoptik (M₁, M₂, M₃) übertragen wird, zu einem Bildsensor (D₂) der optischen Erfassungsvorrichtung (2) verwendet wird, und um gleichzeitig Strahlen, die das Bild des Zielbereichs (Z) bilden, zu einem Bildsensor (D₁) des Bildgebungssystems (1) zu lenken.

7. Verfahren nach Anspruch 3, wobei der mobile Ausgleichsspiegel (5) darüber hinaus zu einem feinen Ausrichtungsmechanismus des an Bord des Trägers eingebauten optischen Kommunikationsterminals per Lasersignalen gehört.

8. Verfahren nach einem der voranstehenden Ansprüche, wobei die optische Erkennungsvorrichtung (2) die Charakterisierungen der Schwankungen der Sichtlinie (V) des Bildgebungssystems (1) gemäß einer Messfrequenz realisiert, die höher als 1 kHz ist.

9. Verfahren nach einem der voranstehenden Ansprüche, wobei jede Schwankungscharakterisierung der Sichtlinie (V) des Bildgebungssystems (1) mit einer Winkelgenauigkeit von weniger als 0,05 µrad realisiert wird.

10. Verfahren nach einem der voranstehenden Ansprüche, wobei das Bildgebungssystem (1) an Bord eines geostationären Landsatelliten oder eines Landsatelliten mit niedriger Höhe (S) eingebaut ist und wobei der Zielbereich (Z) ein Abschnitt der Oberfläche der Erde (T) ist.

11. Verfahren nach Anspruch 10, wobei das optische Kommunikationsterminal per Lasersignalen, das zu dem Satelliten (S) extern ist und das die entfernte Strahlungsquelle (100) bildet, an der Oberfläche der Erde (T) angeordnet ist.

12. Verfahren nach Anspruch 11, wobei das optische Kommunikationsterminal per Lasersignalen, das zu dem Satelliten (S) extern ist und das die entfernte Strahlungsquelle (100) bildet, außerhalb eines optischen Einfallsfeldes (FV₁) des Bildgebungssystems (1) angeordnet ist, das den Zielbereich (Z) enthält.

13. Verfahren nach Anspruch 10, wobei das optische Kommunikationsterminal per Lasersignalen, das zu dem Satelliten (S) extern ist, und das die entfernte Strahlungsquelle (100) bildet, an Bord eines anderen Trägers, umfassend einen anderen Satelliten (R) oder ein anderes Luftfahrzeug angeordnet ist.

14. Bildgebungsgruppe, die zum Einbauen an Bord eines Trägers, umfassend ein Landfahrzeug, ein Luftfahrzeug, einen Satelliten (S) oder ein Schiff geeignet ist, wobei die Bildgebungsgruppe umfasst:
- ein Bildgebungssystem (1), das zum Ausrichten auf einen Zielbereich (Z) bestimmt ist, von dem ein Bild gemäß einer Sichtlinie (V) des Bildgebungssystems aufgenommen werden soll;
- eine optische Erkennungsvorrichtung (2), die während einer Bilderfassungs-Sequenz durch das Bildgebungssystem fest an dem Bildgebungssystem angeschlossen ist, wobei die optische Erkennungsvorrichtung geeignet ist, um im Innern einer Fokalfläche (PF₂) ein Bild (V₀) einer externen Strahlungsquelle (100) zu bilden und um eine Verschiebung des Bildes der externen Strahlungsquelle in der Fokalfläche zu erkennen, um eine Schwankungscharakterisierung der Sichtlinie des Bildgebungssystems zu erfassen; und
- ein optisches Kommunikationsterminal per Lasersignalen, wobei die optische Erkennungsvorrichtung (2) ein Teil des optischen Kommunikationsterminals per Lasersignalen ist und die optische Erkennungsvorrichtung (2) geeignet ist, um das Bild einer Laserquelle zu bilden, die die externe Strahlungsquelle (100) bildet,
wobei die Bildgebungsgruppe **dadurch gekennzeichnet ist, dass** sie darüber hinaus umfasst:
- einen mobilen Ausgleichsspiegel (5) und eine Steuereinheit (6), die geeignet ist, um in Echtzeit den mobilen Ausgleichsspiegel in Abhängigkeit von der Charakterisierung der Schwankungen der Sichtlinie (V) des Bildgebungssystems (1) zu steuern, die von der optischen Erkennungsvorrichtung (2) derart geliefert wird, dass eine Verschiebungsamplitude des Zielbereichs (Z) in dem von dem Bildgebungssystem aufgenommenen Bild gemindert ist; und
dass das optische Kommunikationsterminal per Lasersignalen geeignet ist, um Daten des Bildes, das vom Bildgebungssystem (1) aufgenommen wird, auf ein anderes optisches Kommunikationsterminal per Lasersignalen zu übertragen, das die externe Strahlungsquelle (100) bildet.

15. Bildgebungsgruppe nach Anspruch 14, wobei das Bildgebungssystem (1) und die optische Erkennungsvorrichtung (2) in einem gemeinsamen Kasten enthalten sind oder von einer gemeinsamen Stütze an Bord des Trägers getragen werden.

16. Bildgebungsgruppe nach Anspruch 14 oder 15, umfassend eine gemeinsame Strahlungsauffang-Optik (M₁, M₂, M₃) am Bildgebungssystem (1) und an der optischen Erkennungsvorrichtung (2).

17. Bildgebungsgruppe nach Anspruch 16, wobei die optische Erkennungsvorrichtung (2) darüber hinaus einen Ablenkspiegel (10) umfasst, der während der Bilderfassungs-Sequenz mechanisch am Bildgebungssystem (1) fest und steif angeschlossen ist und zum Lenken der Strahlung, die aus der externen Strahlungsquelle (100) stammt, zur Auffangoptik (M₁, M₂, M₃) angeordnet ist.

18. Bildgebungsgruppe nach Anspruch 17, wobei der Ablenkspiegel (10) der optischen Erkennungsvorrichtung (2) mechanisch an das Bildgebungssystem (1) mittels eines variabel ausrichtbaren Trägers (11) angeschlossen und geeignet ist, damit eine Ausrichtung des Ablenkspiegels in Bezug auf das Bildgebungssystem zwischen zwei sukzessiven Bilderfassungs-Sequenzen durch das Bildgebungssystem variiert werden kann.

19. Bildgebungsgruppe nach einem der Ansprüche 16 bis 18, umfassend einen Wellenlängen-Trenner (4), der zum Lenken der Strahlung angeordnet ist, die aus der externen Strahlungsquelle (100) stammt und von der Auffangoptik (M₁, M₂, M₃) zu einem Bildsensor (D₂) der optischen Erkennungsvorrichtung (2) übertragen wird, und um gleichzeitig Strahlen zu einem Bildsensor (D₁) des Bildgebungssystems (1) zu lenken, die das Bild des Zielbereichs (Z) bilden.

20. Bildgebungsgruppe nach Anspruch 16, wobei das optische Kommunikationsterminal per Lasersignalen einen feinen Ausrichtungsmechanismus umfasst und der mobile Ausgleichsspiegel (5) darüber hinaus Teil des feinen Ausrichtungsmechanismus ist.

21. Bildgebungsgruppe nach einem der Ansprüche 14 bis 20, wobei die optische Erkennungsvorrichtung (2) geeignet ist, um die Charakterisierungen der Schwankungen der Sichtlinie (V) des Bildgebungssystems (1) gemäß einer Messfrequenz von mehr als 1 kHz zu realisieren.

22. Bildgebungsgruppe nach einem der Ansprüche 14 bis 21, wobei die optische Erkennungsvorrichtung (2) geeignet ist, um jede Charakterisierung der Schwankungen der Sichtlinie (V) des Bildgebungssystems (1) mit einer Winkelgenauigkeit von weniger als 0,05 µrad zu realisieren.

## Claims

1. Method for capturing an image using an imaging system on-board a carrier, including a ground vehicle, an aircraft, a satellite (S) or a ship, wherein the imaging system (1) is pointed towards a target zone (Z), an image thereof is to be captured according to a line of sight (V) of the imaging system which is subjected to variations relative to the target zone due to vibrations of said imaging system, wherein an optical detection device (2) is rigidly connected to the imaging system during the variations in the line of sight of the imaging system, said optical detection device being adapted to form, within a focal plane (PF₂), an image (V₀) of a radiation source (100) remote from the carrier and towards which said optical detection device itself is pointed, and to detect a displacement, within said focal plane, of said image of the remote radiation source in order to provide a characterisation of the variations of the line of sight of the imaging system,
the optical detection device (2) itself forming a part of a laser signal optical communication terminal which is on-board the carrier (S), and being pointed, during the image capturing sequence carried out by the imaging system (1), towards a laser signal optical communication terminal external to the carrier, and used to constitute the remote radiation source,
the method being **characterised in that** the imaging system (1) comprises a movable compensating mirror (5), controlled in real time during an image capturing sequence as a function of the characterisation of the variations of the line of sight (V) of the imaging system which is provided by the optical detection device (2), in order to reduce a displacement amplitude of the target zone (Z) in the image captured by the imaging system,
and **in that** the optical detection device (2) is further used to transmit data of the image captured by the imaging system (1) to the laser signal optical communication terminal which is external to the carrier.

2. Method according to claim 1, wherein the imaging system (1) and the optical detection device (2) are contained in one common casing or supported by one common support on-board the carrier.

3. Method according to claim 1 or 2, wherein the imaging system (1) and the optical detection device (2) comprise a radiation collecting optics (M₁, M₂, M₃) common to said imaging system and to said optical detection device.

4. Method according to claim 3, wherein the optical detection device (2) further comprises a deflecting mirror (10) which is mechanically connected to the imaging system (1) in a fixed and rigid manner during the image capturing sequence, and which is arranged so that it directs radiation originating from the remote radiation source (100) towards the acquisition optics (M₁, M₂, M₃).

5. Method according to claim 4, wherein the deflecting mirror (10) of the optical detection device (2) is mechanically connected to the imaging system (1) via a variable-orientation support (11), and wherein an orientation of said deflecting mirror relative to the imaging system is varied between two successive image capturing sequences carried out by the imaging system, so that the optical detection device forms an image of the remote radiation source (100) during each of the two successive image capturing sequences.

6. Method according to any one of claims 3 to 5, wherein a wavelength separator (4) is used to direct the radiation originating from the remote radiation source (100) and transmitted by the collecting optics (M₁, M₂, M₃) towards an image sensor (D₂) of the optical detection device (2), and to simultaneously direct rays forming the image of the target zone (Z) towards an image sensor (D₁) of the imaging system (1).

7. Method according to claim 3, wherein the movable compensating mirror (5) further forms a part of a fine pointing mechanism of the laser signal optical communication terminal on-board the carrier.

8. Method according to any one of the preceding claims, wherein the optical detection device (2) carries out the characterisations of the variations of the line of sight (V) of the imaging system (1) according to a measurement frequency of greater than 1 kHz.

9. Method according to any one of the preceding claims, wherein each characterisation of the variation of the line of sight (V) of the imaging system (1) is carried out with an angular accuracy of less than 0.05 µrad.

10. Method according to any one of the preceding claims, wherein the imaging system (1) is on-board a geostationary Earth orbit satellite or a low Earth orbit satellite (S), and wherein the target zone (Z) is a portion of the surface of the Earth (T).

11. Method according to claim 10, wherein the laser signal optical communication terminal which is external to the satellite (S), and which constitutes the remote radiation source (100), is located at the surface of the Earth (T).

12. Method according to claim 11, wherein the laser signal optical communication terminal which is external to the satellite (S), and which constitutes the remote radiation source (100), is located outside of an input optical field (FV₁) of the imaging system (1) containing the target zone (Z).

13. Method according to claim 10, wherein the laser signal optical communication terminal which is external to the satellite (S), and which constitutes the remote radiation source (100), is located on-board another carrier, including another satellite (R) or aircraft.

14. Imaging assembly adapted for being on-board a carrier, including a ground vehicle, an aircraft, a satellite (S) or a ship, said imaging assembly comprising:
- an imaging system (1) intended to be pointed towards a target zone (Z), an image thereof is to be captured according to a line of sight (V) of the imaging system;
- an optical detection device (2), which is rigidly connected to the imaging system during an image capturing sequence carried out by the imaging system, said optical detection device being adapted to form, within a focal plane (PF₂), an image (V₀) of an external radiation source (100), and to detect a displacement, within said focal plane, of said image of the external radiation source in order to provide a characterisation of the variations of the line of sight of the imaging system; and
- a laser signal optical communication terminal, the optical detection device (2) being a part of said laser signal optical communication terminal, and the optical detection device (2) being adapted to form the image of a laser source constituting the external radiation source (100),
the imaging assembly being **characterised in that** it further comprises:
- a movable compensating mirror (5) and a control unit (6) adapted to control, in real time, the movable compensating mirror as a function of the characterisation of the variations of the line of sight (V) of the imaging system (1) which is provided by the optical detection device (2), so as to reduce a displacement amplitude of the target zone (Z) in the image captured by the imaging system; and
**in that** the laser signal optical communication terminal is adapted to transmit data of the image captured by the imaging system (1) to another laser signal optical communication terminal which constitutes the external radiation source (100).

15. Imaging assembly according to claim 14, wherein the imaging system (1) and the optical detection device (2) are contained in one same casing or supported by one common support on-board the carrier.

16. Imaging assembly according to claim 14 or 15, comprising a radiation collecting optics (M₁, M₂, M₃) common to the imaging system (1) and to the optical detection device (2).

17. Imaging assembly according to claim 16, wherein the optical detection device (2) further comprises a deflecting mirror (10) mechanically connected to the imaging system (1) in a fixed and rigid manner during the image capturing sequence, and arranged so that it directs radiation originating from the external radiation source (100) towards the collecting optics (M₁, M₂, M₃).

18. Imaging assembly according to claim 17, wherein the deflecting mirror (10) of the optical detection device (2) is mechanically connected to the imaging system (1) via a variable-orientation support (11), and adapted so that an orientation of said deflecting mirror relative to the imaging system can be varied between two successive image capturing sequences carried out by the imaging system.

19. Imaging assembly according to any one of claims 16 to 18, comprising a wavelength separator (4) arranged so that it directs the radiation originating from the external radiation source (100) and transmitted by the collecting optics (M₁, M₂, M₃) towards an image sensor (D₂) of the optical detection device (2), and to simultaneously direct rays forming the image of the target zone (Z) towards an image sensor (D₁) of the imaging system (1).

20. Imaging assembly according to claim 16, wherein the laser signal optical communication terminal comprises a fine pointing mechanism, and the movable compensating mirror (5) further forms a part of said fine pointing mechanism.

21. Imaging assembly according to any one of claims 14 to 20, wherein the optical detection device (2) is adapted to carry out the characterisations of the variations of the line of sight (V) of the imaging system (1) according to a measurement frequency of greater than 1 kHz.

22. Imaging assembly according to any one of claims 14 to 21, wherein the optical detection device (2) is adapted to carry out each characterisation of the variations of the line of sight (V) of the imaging system (1) with an angular accuracy of less than 0.05 µrad.
